# EUROPEAN PATENT SPECIFICATION

(11) **EP 4 295 217 B1**
(45) Date of publication and mention of the grant of the patent: **04.06.2025**
(21) Application number: 22712900.4
(22) Date of filing: 01.03.2022
(51) Int. Cl.: G06F 3/01, G06V 20/20, G05B 19/042, G06T 7/70, G06T 19/00, G06Q 10/00, G05B 19/00, G06Q 10/20, G06V 10/25, G06V 10/94, G06V 20/64, G06V 40/19, G06V 40/20

(54) **IDENTIFYING A PLACE OF INTEREST ON A PHYSICAL OBJECT THROUGH ITS 3D MODEL IN AUGMENTED REALITY VIEW**
IDENTIFIZIERUNG EINES ORTES VON INTERESSE AUF EINEM PHYSIKALISCHEN OBJEKT DURCH DESSEN 3D-MODELL IN DER ANSICHT MIT ERWEITERTER REALITÄT
IDENTIFICATION D'UN LIEU D'INTÉRÊT SUR UN OBJET PHYSIQUE PAR SON MODÈLE 3D EN RÉALITÉ AUGMENTÉE

(30) Priority: 22.03.2021 EP 21163948
(43) Date of publication of application: 27.12.2023
(73) Proprietor: Siemens Aktiengesellschaft, 80333 München (DE)
(72) Inventor: SUDHARSAN-GRÖBER, Nischita, 82131 München (DE); HUTTER, Andreas, 81673 München (DE)
(74) Representative: Siemens Patent Attorneys
(86) International application number: PCT/EP2022/055165
(87) International publication number: WO 2022/199995

(56) References cited:
- CN-A- 108 509 026
- DK-A1- 201 800 123
- US-A1- 2019 279 424
- US-A1- 2021 074 071

## Description

### Field of the Invention

The embodiments disclosed herein relate to a method for identifying at least one place of interest on a physical object within a physical environment, using augmented reality and a 3D model of the physical object. A corresponding computer program product and computer-readable storage are disclosed as well.

### Background of the Invention

Industry use cases such as quality assurance, inspection, maintenance, testing, training, and so on have complex machine parts to be checked for correctness, repair, or assembly. These tasks are mostly done by service technicians who use the help of paper manuals or fixed monitors with media type manuals which help them complete the task. These are mostly cumbersome and time-consuming and are prone to errors if protocoling has gone wrong. Furthermore, if instructions or material to perform the task changes, this can take a lot of time to reflect in the help manuals.

Augmented Reality (AR) is one such technology which has been used to ease this process and make it more efficient and optimized. AR is an increasing trend in technology being used to perform industry related tasks in a factory site or similar environment.

The prior art of US 2019 / 279424 A1 discloses a method for identifying at least one place of interest on a physical object within a physical environment, using augmented reality and a 3D model of the physical object,the method comprising the steps: aligning, in an augmented reality view, the 3D model with the physical object within the physical environment; determining motion data by tracking at least a head of a user related to the physical object; identifying said at least one place of interest by determining at least one intersection point of the head orientation and the physical object.

### Summary

Accordingly, there is a need to provide a procedure which can be used for further improving the ease of the use of AR applications.

Embodiments herein generally relate to a method for identifying at least one place of interest on a physical object within a physical environment, using augmented reality and a 3D model of the physical object.

In one embodiment, the method including the steps of:
- aligning, in an augmented reality view, the 3D model with the physical object within the physical environment,
- determining motion data by tracking at least one gesture of a user related to the physical object,
- identifying said at least one place of interest by determining at least one intersection point of said at least one gesture and the physical object,
wherein said at least one intersection point is determined by using at least one virtual proximity sensor comprised by the 3D model in relation to the motion data.

The method according to the invention will make use of the spatial environmental information that an AR device can offer. Colliders, which are defining the shape of a 3D object in the 3D scene and includes virtual sensors that detect proximity of intersection among 3D objects, on both the 3D models and the hand tracking are enabled. The person with the AR device shall touch the physical object to virtually mark the points of interests (POIs). The colliders of the 3D model will interact with the colliders of the tracked finger (i.e. an intersection of the 3D model of the model and the finger is detected in the 3D engine).

According to the invention, a first collider related to the 3D model of the physical object and a second collider related to the motion data of the at least one gesture of a user exists.

So, for the step of "identifying said at least one place of interest by determining at least one intersection point of said at least one gesture and the physical object" a 3D engine supporting colliders is used.

Further, said at least one intersection point is determined by using at least one virtual proximity sensor applied to the first collider of the 3D model in relation to the second collider of the motion data of the at least one gesture.

According to the embodiments a key element of the invention is to use at least one virtual proximity sensor and motion data of a user to determine an intersection point. The intersection point is used to determine the place of interest the user wants to select.

Places of interest (POI) are any areas or parts of the physical object, especially a machine, object, etc., where the user needs to focus on, to perform a particular task. These POIs could be specific parts of the physical object or some special markings which need to be checked for correctness.

The virtual proximity sensors are digital "sensors" capable of detecting proximity of intersection among 3D objects in a 3D scene in augmented reality.

According to the invention said at least one place of interest is identified directly in the augmented reality (AR) environment. After identification it can be used for different purposes. Preferred purposes are adding information, arranged to be shown to future users in AR, like instructions, explanations, or references to the identified places of interest or adding visual markers, like highlights, arrows, or lines, points to the identified places of interest. Further embodiments are disclosed in the following.

In a further embodiment the method comprising the further step of adapting a transparency of the 3D model. Sometimes the 3D model needs to be transparent to blend the 3D model onto the physical object, especially to only see identifiers corresponding to places of interest. Therefore, the quick access of the transparency toggling feature is preferred.

In a further embodiment the method comprising the further step of acquiring image documentation and/or video documentation, the documentation and/or the video documentation being related to said at least one place of interest.

In the industry use cases, there also exists a need for protocoling media such as videos or photos taken from the device used for inspection. These can be either used to record training material or inspect with the help of pre-recorded material. This could also be for the use case, where a service technician needs to send a picture or video of the faulty or missing part on the machine. For this, a vid-eo/photo taking feature is preferred.

In a further embodiment the method comprising the further step of storing said at least one place of interest with the 3D model of the physical object. This has the advantage that in future use of different users or the same user, the place of interest and data which might be added to it in a further preferred step, can be used again.

In a further embodiment the method comprising the further steps of:
- deleting said at least one place of interest related to the 3D model and/or
- modifying said at least one place of interest related to the 3D model,
wherein the deleting step and the modifying step are performed by including second motion data determined by tracking at least one second gesture of a user related to the physical object.

Furthermore, if there is any change in a place of interest (POI) or any redundant POI to be removed, a user need not go back to the original 2D software to change this or change this in the code. The user can do this directly on an AR app in a "POI editing mode".

The technical problem that this invention solves with this embodiment is the modification of the POI. Once the POIs are created, and preferably identifiers or additional data and information are added to the POIs, there may be a use case where the POIs need to be edited or deleted.

Directly within an AR view, the user can intuitively touch the identifier and change its transformational values by moving, resizing, or changing its orientation. Associated 3D coordinates will change when the user moves the identifier. Similarly, the rotational transforms also change when user orients the identifier to face up, down or sideways or at any angle that the user desires it to be. The POIs can also be manipulated to make it bigger or smaller and correspondingly the scale transforms on the POI will also be reflected.

In a further embodiment for the determining of the motion data a 3D-depth sensor in the AR-device is used. This has the advantage that motion data, which can be interpreted as interaction data of a particular interaction with the physical object, can be collected in a 3D environment. The coordinates of the motion data can then be used in relation to coordinates of the physical object.

In a further embodiment the method comprising the further step of determining a position of the physical object within the physical environment using a spatial awareness technology, especially Simultaneous Localization and Mapping (SLAM) technology.

This further step is performed before the aligning, in the augmented reality view of the 3D model, with the physical object, within the physical environment and after the step of identifying said at least one place of interest.

Coordinates of said position of the one or more POI identified on a physical object are stored with a Simultaneous Localization and Mapping (SLAM) map.

A spatial awareness system provides real-world environmental awareness in mixed reality applications. A known technology is SLAM Simultaneous Localization and Mapping which creates a 3D map of the environment scanned with the AR device (e.g. via cameras or lidar). Spatial Awareness provides a collection of meshes, representing the geometry of the environment, which allows for an AR application to place holograms in the real world and for compelling interactions between holograms and the real-world.

In a further embodiment the method comprising the further step of categorizing said at least one place of interest into a predefined category, wherein the categorizing is performed by including third motion data determined by tracking at least, one third gesture of a user related to the physical object.

In a scenario when there are several places of interest, preferably with corresponding identifiers, and these, if shown all at once to the user could overwhelm the user and distract focus. Therefore, with the method step of categorizing places of interest or categorizing identifiers, the invention addresses the technical problem to fine tune the focus of the service technician, to further concentrate on specific identifiers. These could be particularly useful when there are different steps to the process of completing the task, and one wants to only show the identifiers related to that step.

The method of the invention offers both categorization without coding and direct validation in an AR app itself, which makes it quick and easy without iterations. The user interaction with an app according to the invention is also intuitive, which means no extensive learning modules of the software or coding is required to categorize identifiers.

Moreover, overflow of information is avoided by using grouping of identifiers into categories. This also helps the user choose and focus on category chosen to only show its identifiers to inspect. The technology for grouping of identifiers into categories is also allowing for easy interaction and quick categorization.

In a further embodiment the method comprising the further step of labelling said at least one place of interest using an identifier. Identifiers have the advantage that they can be used to label a place of interest. Identifiers, after adding them, can be used to select a place of interest by the user or to add some further information to a place of interest.

In a further embodiment the identifier comprises an information regarding:
- a mistake been made,
- an error,
- a faulty behaviour,
- an expectancy,
- a need for maintenance,
- a need for inspection and/or
- a need for quality assurance
related to the physical object and/or said at least one place of interest. This has the advantage that information can be added to the physical object and/or said at least one place of interest. This information can be shown to future users.

In a further embodiment the method comprising the further step of adding instructional data to said at least one place of interest, the instructional data being part of the 3D model. This has the advantage that the instructional data can be added to the physical object and/or said at least one place of interest. This instructional data can be shown to future users. The instructional data can preferably be arranged as a manual, a training video, or an information sheet.

In a further embodiment the instructional data comprising:
- a work instruction,
- a working step,
- a step to be performed,
- a guidance information,
- a visual instruction,
- training information,
- an instruction for performing an inspection,
- an instruction for performing quality assurance,
- an instruction for performing technical service and/or
- an instruction for performing a test.

This has the advantage that the invention solves both the creation and adding of instructional data, especially AR guided instructions, as well as protocoling of them within the AR view by the photo feature explained above, along with providing a simple framework with no coding required, to create a personalized AR assisted app. This app will help to complete tasks in different use-cases, especially the above-mentioned use-cases.

The framework also is extendible if own software code needs to be integrated on top of the available features mentioned in this invention. The scope of the invention focuses on head-mounted devices, but other devices could be equally supported.

A further advantage of the invention is that it provides a method to create an AR framework of features which can be easily customized and re-used for individual use-cases.

In a further embodiment the physical environment being:
- an industrial environment,
- an industrial plant
- a production plant,
- an energy plant,
- a building environment,
- a hospital environment, and/or
- a technical environment.

This has the advantage that the invention can be used for different physical environments and in different settings.

In a further embodiment the 3D model is arranged as a 3D outline, comprising lines and points. In this embodiment the 3D model can also be described as a 3D outline. The lines can connect edges of the 3D model the physical object.

In a further embodiment the 3D model is arranged as a 3D volume, comprising lines, points, and surfaces. The 3D volume can be a rendered version of the physical object.

According to a further embodiment a computer program product is provided. The computer program product comprising instructions which, when the program is executed by the computational device, cause the computational device to carry out the steps of the method according to the invention.

According to a further embodiment a computer-readable storage medium is provided. The computer-readable storage medium comprising instructions which, when executed by the computational device, cause the computational device to carry out the steps of the method according to the invention.

It is to be understood that the elements and features recited in the appended claims may be combined in different ways to produce embodiments that likewise fall within the scope of the present invention.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

### Brief Description of the Drawings

- Fig. 1: shows a sequence diagram of a claimed method,
- Fig. 2: shows a schematic view of an alignment of a 3D model on physical object,
- Fig. 3: shows a schematic view of model positioning and model transparency toggle,
- Fig. 4: shows a schematic view of identifiers positioned around the places of interest as selected by the user,
- Fig. 5: shows a schematic view of categorizing places of interest,
- Fig. 6: shows a schematic view of touching and selecting an identifier 5,
- Fig. 7: shows a schematic view of an AR user manual,
- Fig. 8: shows a schematic view of a photo frame, and
- Fig. 9: shows a schematic view of taking a picture of previously identified place of interest on a physical object.

### Detailed Description of the Drawings

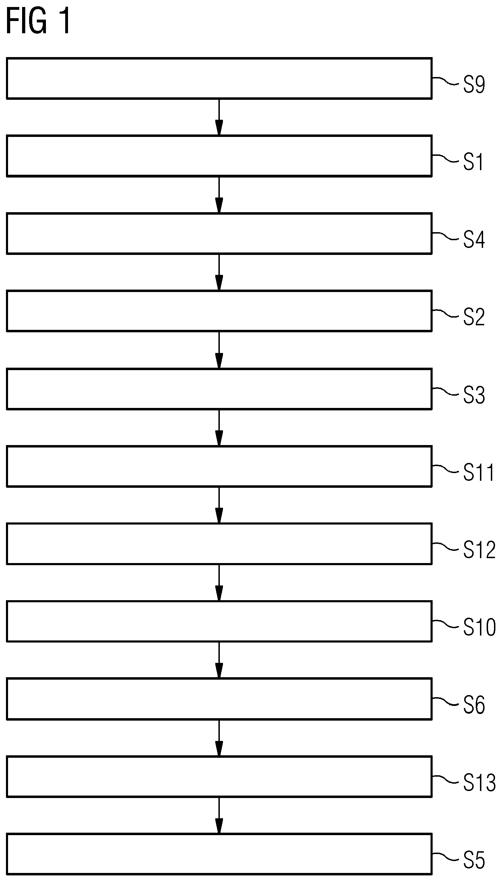

Fig. 1 shows a sequence diagram of a claimed method for identifying at least one a place of interest on a physical object through its 3D model in augmented reality view. , said at least one place of interest providing basis for adding instructional data to said at least one place of interest.

The method comprising the steps:
- Step S9: Determining a position of the physical object within the physical environment using a spatial awareness technology, especially Simultaneous Localization and Mapping (SLAM) technology,
- Step S1: Aligning, in an augmented reality view, the 3D model with the physical object within the physical environment,
- Step S4: Adapting a transparency of the 3D model,
- Step S2: Determining motion data by tracking at least one gesture of a user related to the physical object,
- Step S3: Identifying said at least one place of interest by determining at least one intersection point of said at least one gesture and the physical object,
   wherein said at least one intersection point is determined by using at least one virtual proximity sensor comprised by the 3D model in relation to the motion data,
- Step S11: Categorizing said at least one place of interest into a predefined category,
   wherein the categorizing is performed by including third motion data determined by tracking at least one third gesture of a user related to the physical object,
- Step S12: Labelling said at least one place of interest using an identifier,
- Step S10: Storing coordinates of said position of said at least one place of interest of the physical object with a Simultaneous Localization and Mapping (SLAM) map,
- Step S6: Storing said at least one place of interest with the 3D model of the physical object,
- Step S13: Adding instructional data to said at least one place of interest, the instructional data being part of the 3D model, and
- Step S5: Acquiring image documentation, the image being related to said at least one place of interest.

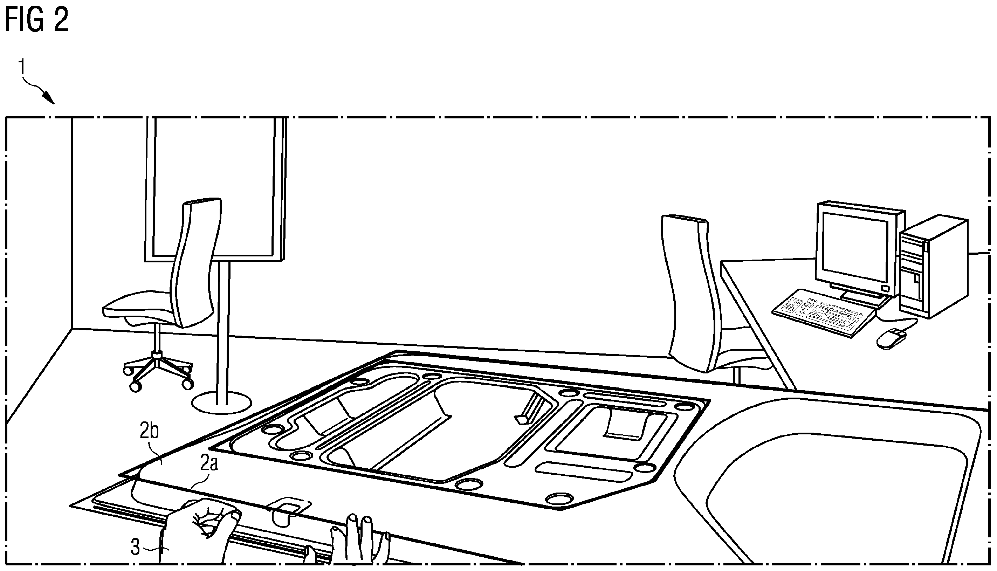

Fig. 2 shows an alignment of a 3D model 2a on actual physical object in a physical environment 1.

This step (step S1 in Fig. 1) is necessary when the 3D model 2a needs to be aligned/overlaid in augmented reality onto an existing physical object 2b. Alignment is a common feature required when the overlaid 3D model along with its pre-imposed instructions or annotations are helping a service technician 3 to focus on any place of interest. In Fig. 2 the 3D model is arranged as an 3D outline.

Places of Interests (POI) are explained as any area or part of the machine, object, etc. in context, where the user needs to focus on, to perform a particular task. Existing methods are using marker-based alignment methods with QR codes or other markers or manual alignment, which involves pinching or grabbing the 3D model and manipulating its scale, rotation, or position with hand gestures.

The alignment is a common feature in most AR apps.

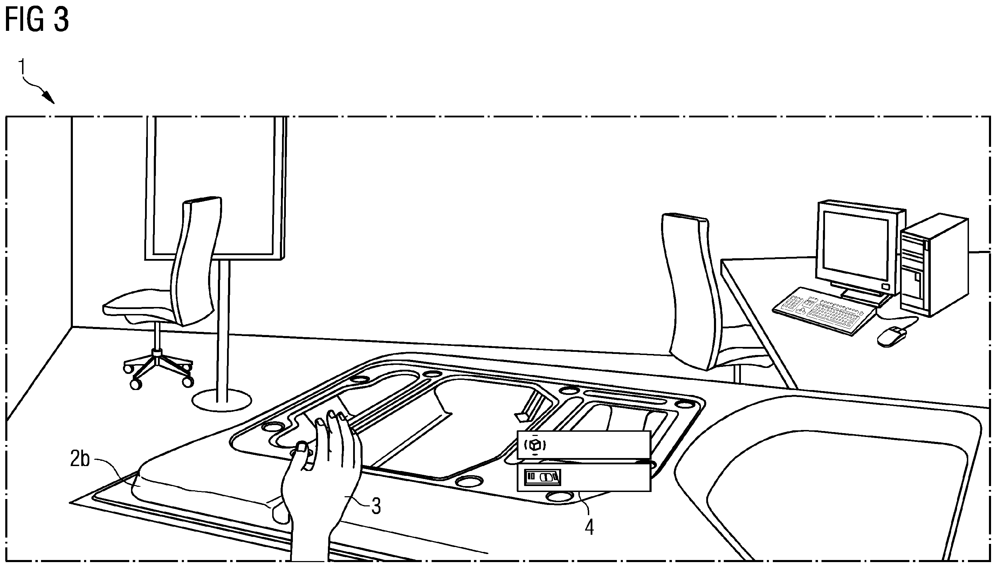

Fig. 3 shows an optional feature of accessing the 3D model 2a (shown in Fig. 1) positioning and model transparency toggle via hand menu 4.

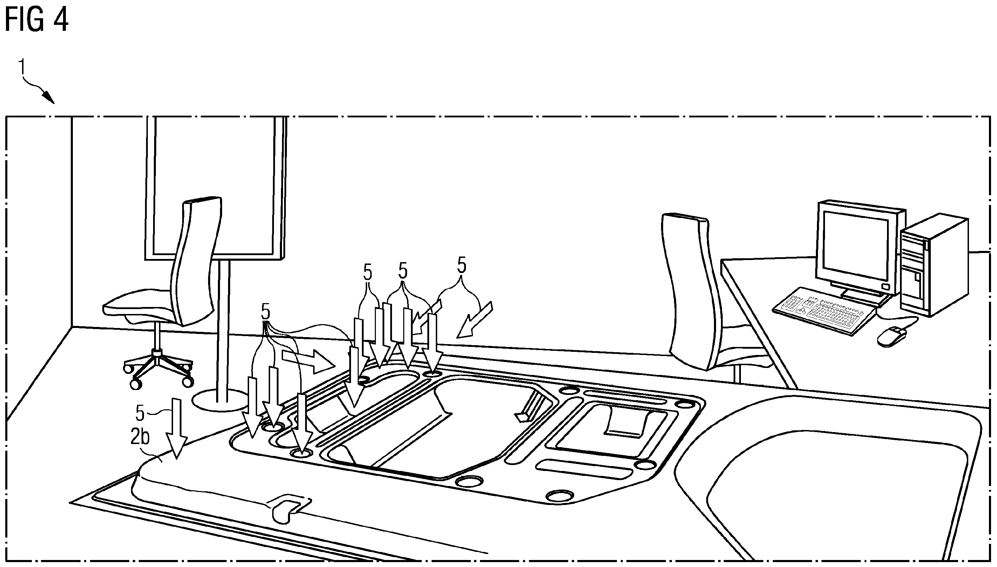

Sometimes the 3D model 2a needs to be transparent in order to blend the 3D model onto the actual physical object 2b and only see the identifiers (explained below with Fig. 4). Therefore, the quick access of the transparency toggling feature 4 is needed.

In the following Step S2 and S3 (Fig. 1) of determining motion data by tracking at least one gesture of a user related to the physical object and of identifying said at least one place of interest by determining at least one intersection point of said at least one gesture and the physical object, wherein said at least one intersection point is determined by using at least one virtual proximity sensor comprised by the 3D model in relation to the motion data, is explained.

For industry use cases using AR apps to assist service technicians complete their tasks with ease, it becomes necessary to identify places of interest both on the physical object 2b and in the 3D model 2a. Places of Interests (POI) are explained as any (typically small) area or part of the machine, object, etc. in context, where the user needs to focus on, to perform a particular task. These POIs could be specific parts of the physical object 2b or some special markings which need to be checked for correctness, for example.

As claimed technical prerequisites are a 3D model 2b of the physical object 2b, a 3D engine supporting colliders (defined below), and an AR device capable of spatially mapping the environment (e.g. SLAM) and spatial hand tracking or gesture recognition for determining motion data by tracking at least one gesture of a user related to the physical object.

Colliders are defining the shape of a 3D object in the 3D scene and includes virtual sensors that detect proximity of intersection among 3D objects. This function is provided e.g. by a 3D engine like Unity3D.

The following steps are listed as part of creating POIs directly in the AR view with an AR device:
1. With the help of the AR device, overlay the 3D model 2a on top of the physical object 2b in context in the real world, meaning the physical environment 1. Make it fit exactly either by automatic registration or using manual alignment and hand gestures.
2. The AR app will make use of the spatial environmental info that an AR device can offer. The colliders (defined above) on both the 3D models 2a and the hand tracking are enabled. The person 3 with the AR device shall touch the physical object 2b to virtually mark the POIs. The colliders of the 3D model 2a will interact with the colliders of the tracked finger (i.e. an intersection of the 3D model 2a of the model and the finger 3 is detected in the 3D engine).
3. The point or small area of the intersection is instantiated as POI in the 3D model 2a and it is registered in the 3D map of the physical environment 1. Each of the POIs created this way thus will have its associated positional information. This positional information is represented as 3D coordinates points with x,y,z-axes values. These 3D coordinates are then saved into the system as corresponding points of interests for this physical object 2b, and in that spatial environment.

Fig. 4 shows identifiers (shown as arrows 5) positioned around the places of interest as selected by the user. The POIs in this example are holes on a car door frame.

At this stage, the display of virtual identifiers 5 (shown in Fig. 4) such as arrows, can be automated to be moved exactly to these virtual touch points or to what is referred here as POIs. This automated movement can be done via a simple lerping algorithm (explained below). These POIs represent areas where any inspection or check needs to be performed. Different existing libraries can support with the spatial environmental information needed for the recognition and identification of the elements needed, such as spatial awareness (explained below) and hand tracking.

Lerping is defined as the linear interpolation between two points. In this invention, this is used to move the identifiers from one point (random place in scene) to the other (to identified POIs). This function is provided e.g. by a 3D engine like Unity3D.

A spatial awareness system provides real-world environmental awareness in mixed reality applications. A known technology is SLAM Simultaneous Localization and Mapping which creates a 3D map of the environment scanned with the AR device (e.g. via cameras or lidar). Spatial Awareness provides a collection of meshes, representing the geometry of the environment, which allowed for compelling interactions between holograms and the real-world.

Advantages of the presented technologies include when there is a new AR app to be developed, the authoring of the 3D model 2a is often cumbersome. This usually involves a 2D or 3D desktop software, using which the author/user/developer marks the POIs which are then used later in the AR app. This process is slow and iterative and there is no instant AR validation of the same, since the desktop view will not justify the final AR outcome. Therefore, in this invention, a method to create POIs in the AR view directly using an AR device is proposed.

Furthermore, if there is any change in the POI or any redundant POI to be removed from the AR app, a user need not go back to the original 2D software to change this or change this in the code. The user can do this directly on an AR app in a "POI editing mode" explained below.

A further technical problem that this invention aims to solve is the modification of the POI. Once the identifiers are created, there may be a use case where the identifiers need to be edited or deleted (steps not shown in Fig. 1).

Directly within the AR view of the app, the user can first enter the "edit POI mode". This can be done by the way of either pressing a button or any similar UI interaction. Once this edit mode is entered, the user can intuitively touch the identifier and change its transformational values by moving, resizing, or changing its orientation. The associated 3D coordinates will change when the user moves the identifier. Similarly, the rotational transforms also change when user orients the identifier to face up, down or sideways or at any angle that the user desires it to be. The POIs can also be manipulated to make it bigger or smaller and correspondingly the scale transforms on the POI will also be reflected. Different existing library are providing the basic movement, resizing and rotational changes to be able to be made to 3D info in the scene.

The edit mode will also provide a delete functionality where in the user can delete (by way of a touchable button) identifiers which are not needed. All of this is done again within the AR app itself - there is no need for any coding or backend changes in any 2D software associated with the original source code of the templates.

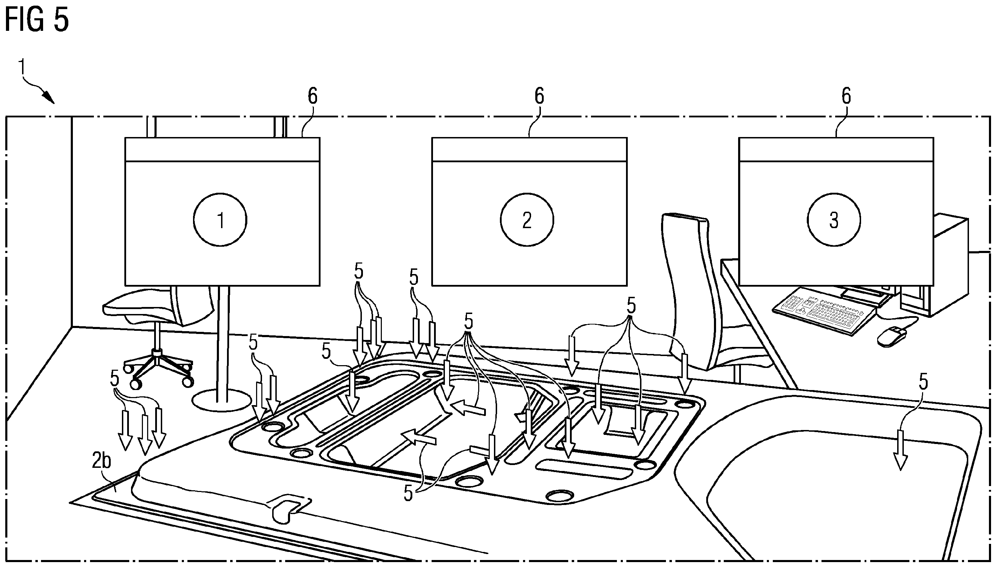

Fig. 5 shows the step of categorizing places of interest of a physical object 2b in the physical environment 1 into a predefined category 6 (step S11 in Fig. 1), especially of classifying identifiers. "Gruppe1", "Gruppe2", "Gruppe3" are examples of categories 6.

In a scenario when there are several identifiers and these, if shown all at once to the user could overwhelm the user and distract focus. Therefore, with this feature of categorizing identifiers, the invention addresses the technical problem to fine tune the focus of the service technician, to further concentrate on specific identifiers. These could be particularly useful when there are different steps to the process of completing the task, and one want to only show the identifiers related to that step.

Existing methods or technologies use the categorization and grouping of identifiers in the pre-commissioning phase of the AR app. This normally involves a 2D desktop software which the user/author needs to know how to use. Secondly, with the help of 2D UI based grouping or coding-based categorization, there are many iterations as these need to be actually tested in the AR view. These methods are slow and time-consuming.

The method of the invention offers both categorization without coding and direct validation in the AR app itself, which makes it quick and easy without iterations. The user interaction with an app according to the invention is also intuitive, which means no extensive learning modules of the software or coding required to categorize identifiers. Moreover, overflow of information is avoided by using grouping of identifiers into categories 6. This also helps the user choose and focus on category 6 chosen to only show its identifiers to inspect. The technology for grouping of identifiers into categories 6 is also allowing for easy interaction and quick categorization.

Prerequisites for this method steps are that colliders are enabled for identifiers, spatial awareness is enabled, and an AR device.

In a category editing mode, a user is allowed to enter the category name (otherwise a name like "category_1" is automatically suggested). This category name could be entered by using the virtual keyboard. Once the user has entered the name, he/she could proceed onto touching the identifiers and thereby selecting them to virtually group them in the category in context. If a mistake has been made, they can touch it again to unselect it from the category. This way of grouping the identifiers is quick and easy. It also avoids iterations when done traditionally from a 2D app vs direct validation in AR with 3D app. Moreover, overflow of information is avoided by using grouping of identifiers into categories. This also helps the user choose and focus on category chosen to only show its identifiers to inspect.

If any categories need to be removed or edited, there would be a provision for that in the category editing mode via touchable buttons. The categorize mode can be imagined like a panel with different categories and the category needed can be selected by touch. The panel template to categorize is made available by an app template according to the invention.

Once the category selection is complete, the app template shows the categories in the AR view by means of round buttons on a flat panel. These can be pressed to activate or deactivate the POIs in that category.

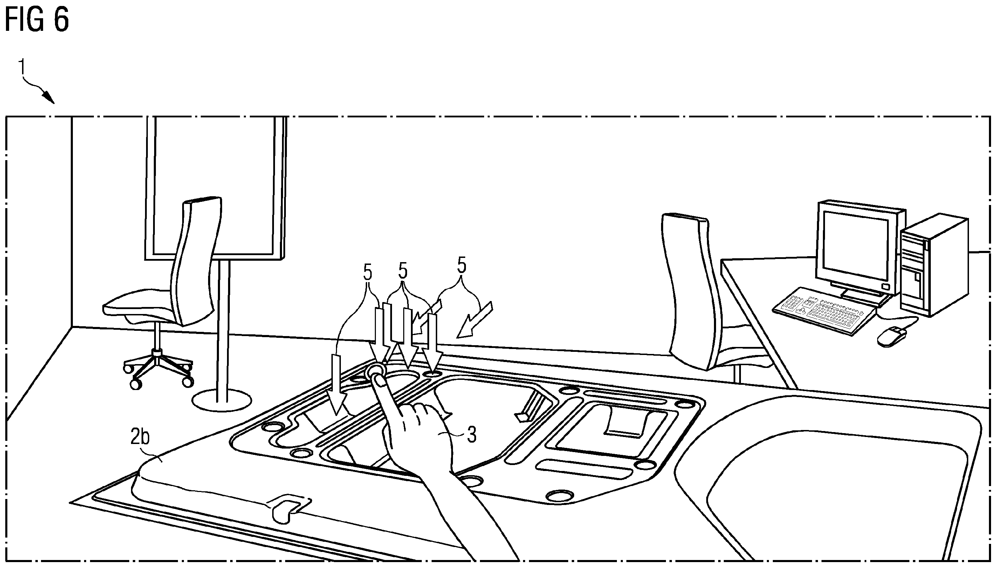

Fig. 6 shows touching and selecting an identifier 5 of a place of interest of a physical object 2b in a physical environment 1 by hand 3. This is especially usefully for selecting an identifier 5 to perform an inspection or to add inspection information, to mark something as missing or faulty is a common use case in inspections or quality assurance.

Existing methods are not intuitive enough involving 2D like panels on a 3D UI in the AR view to mark something as faulty or missing. AR annotations are also another way to mark or provide extra info while performing a task, however, is also not intuitive enough to use in its interaction and may involve external devices such as pens or styluses to annotate.

Therefore, with the invention an easy and intuitive approach to identify or bring attention to certain POIs when something is missing/faulty is proposed. According to the invention, the process of inspection is very quick and eliminates any paper protocoling as well. The toggling interaction also makes it easy and intuitive to conduct inspections. The AR app state can be saved locally and can be sent to a server to log the result.

Prerequisites are that colliders for identifiers are enabled, spatial awareness is enabled, and an AR device.

The identifier 5 in a purposed app template is an arrow. When a user wishes to mark the arrow (or any identifier 5) by a way of saying that something is missing or faulty there, or is unexpected, they need to just touch the arrow. Touching it again toggles it back to the present or valid state. This can help if something has been marked wrong accidentally or the state needs to be simply toggled to a valid state after an inspection has been done. The touch technology is provided by the AR tool kit. The method for toggling between identifiers 5 and the concept is provided by an app template of the invention. This does not involve coding or any elaborate panels or annotation mechanisms.

Additionally, if the entire category needs to be marked as faulty/missing or present/valid, then panels with dedicated buttons are available as templates. These need to be just shown alongside a category option by reusing the template in the scene.

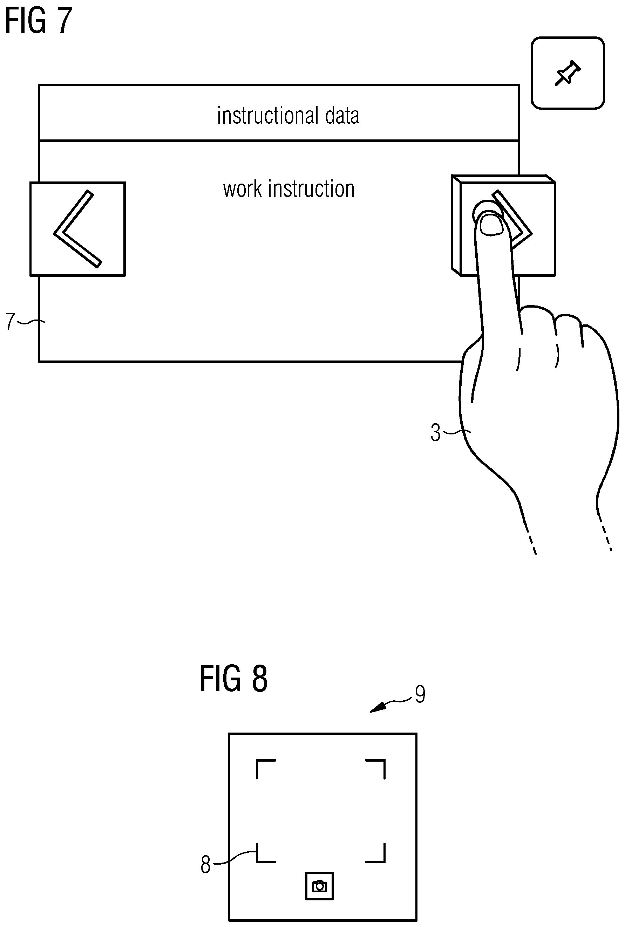

Fig. 7 shows an example AR user manual 7 created according to the method step (S13, Fig. 1): Adding instructional data to said at least one place of interest. The AR user manual including instructional data 7 or work instructions. In almost all industry use cases mentioned above, there exists a need for the service technician to refer to a user manual 7 to review steps of instruction to complete a task. The AR app also needs to provide a virtual user manual 7 for the same purpose. These can be created using 2D desktop software which can be time-consuming without providing direct validation in AR. Therefore, the traditional methods of creating an AR manual are iterative.

To solve this technical problem, an app template according to the invention provides an authoring tool in the AR view itself which is providing a very quick and easy UI to create user manuals 7 and provides instant validation in AR to the author or user 3.

Prerequisites for this step are that objects are enabled with colliders for touch gesture to work, spatial awareness is enabled, and a head-mounted AR device.

This method step can be imagined as a flat panel where in the user enters the step by step instructions directly in AR using the already provided virtual keyboard. The author or user 3 need only enter,
- Number of steps
- Title for each step
- Description for each step (description can also include adding a video or an image).

Upon entry of these by the author 3, an app template according to the invention enables the panel in AR and shows how the AR manual 7 looks like. It would also automatically insert the next and back buttons and any logic needed therein (calculated from number of steps). This way any new manuals 7 or AR work instructions can be quickly created by using the 3D app template. In case there is a need for any new step to be added or deletion of a previous step, the user can imagine entering a "manual editing mode", by way of touching a button and then choosing the step to be deleted by selection via touch. This does not involve coding if the template is used. However, the option to integrate and extend the customization is available via coding.

In the following an advantage embodiment of the method step (S5, Fig. 1) "Acquiring image documentation, the image being related to said at least one place of interest" is given.

In the industry use cases, there also exists a need for protocoling media such as videos or photos taken from the device used for inspection. These can be either used to record training material or inspect with the help of pre-recorded material. This could also be for the use case, where the service technician needs to send a picture or video of the faulty or missing part on the machine. For this, the app template includes a video/photo taking feature which can be integrated into steps as needed.

Prerequisites for this method steps are the objects are enabled with colliders for touch gesture to work, spatial awareness is enabled, and a head-mounted AR device.

The photo taking logic involves in its AR view a photo frame 9, as shown in Fig. 8, with four borders indicating the field of view 8 in order to guide the user to position the object/area being photographed within those borders

A photo button which can be pressed to start the photo taking process. The photo button can either be pressed via touch gesture or controlled via eye gaze, especially a long gaze for more than 2 sec or controlled by a voice command to be activated.

If the touch option is used to press the photo button, one may encounter the problem if the user's hand is still in the view of the photo being taken. Therefore, the invention introduces a delay of 1 sec after which the photo is clicked. To make this also understandable and intuitive for the user, the invention shows simultaneously a progress circle for 1 sec during which time the aforementioned delay is introduced.

Once the photo is clicked, it is shown back to the user which acts as a validation method for the user to confirm or discard the photo taken. This step can also be made optional.

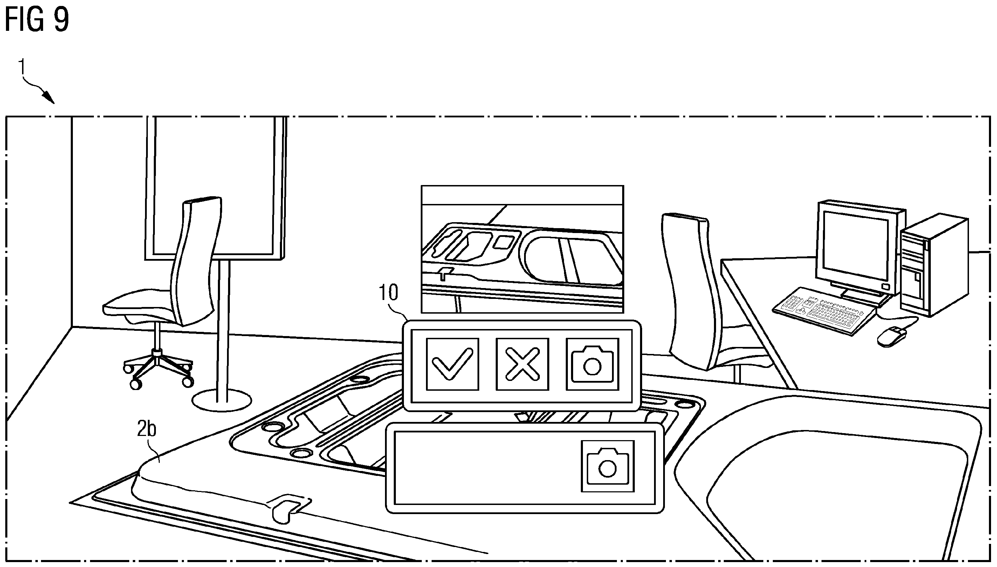

Fig. 9 shows taking a picture of previously identified place of interest on a physical object as an example where a technician marks something on a physical object 2b within a physical environment 1 as missing or wrong, especially errors, faults, scratches, dents, and wants to take a picture to protocol it. For the process of marking something a dedicated menu 10 is given. A photo taken is displayed back onto a panel with the menu 10 for validation and correctness.

Like the photo taking logic a video taking logic (not shown) involves in its AR view:
- A frame with four borders to indicate the video being taken within that view,
- a video button at the top left corner of the screen, which when pressed toggles to a recording button,
- the recording button can be pressed again to stop recording,
- the buttons can also be activated via gaze or voice as indicated above in the photo taking logic,
- once the video is clicked, it is shown to the user in a panel with a play button, which can be clicked to play the video. Confirm and discard buttons are made available through the template.

The app template provides these important features of photo and video recording which is needed in most inspection or training use cases. Any user needing to use these features can simply use the templates provided by the app to include these features. This does not involve coding if the template is used. However, the option to integrate and extend the customization is available via coding.

Although the invention has been explained in relation to its advantageous embodiment(s) as mentioned above, it is to be understood that many other possible modifications and variations can be made without departing from the scope of the present invention. The scope of the invention is defined only by the claims.

## Claims

1. A method for identifying at least one place of interest on a physical object (2b) within a physical environment (1), using augmented reality and a 3D model (2a) of the physical object (2b),
the method comprising the steps:
- aligning (S1), in an augmented reality view, the 3D model (2a) with the physical object (2b) within the physical environment 1,
- determining (S2) motion data by tracking at least one gesture of a user (3) related to the physical object (2b),
- identifying (S3) said at least one place of interest by determining at least one intersection point of said at least one gesture and the physical object (2b)
the method being **characterised in that** it is using a 3D engine supporting colliders, whereby colliders are defining the shape of a 3D object in the 3D scene and include virtual sensors that detect proximity of intersection among 3D objects, wherein:
- a first collider related to the 3D model of the physical object and
- a second collider related to the motion data of the at least one gesture of a user exists,
wherein said at least one intersection point is determined by using at least one virtual proximity sensor applied to the first collider of the 3D model in relation to the second collider of the motion data of the at least one gesture.

2. Method according to claim 1,
wherein the method comprising the further steps of:
- adapting (S4) a transparency of the 3D model (2a) and/or
- acquiring (S5) image documentation (10), the image documentation (10) being related to said at least one place of interest.

3. Method according to one of the previous claims,
wherein the method comprising the further step of:
- storing (S6) said at least one place of interest with the 3D model (2a) of the physical object (2b).

4. Method according to claim 3,
wherein the method comprising the further steps of:
- deleting (S7) said at least one place of interest related to the 3D model (2a) and/or
- modifying (S8) said at least one place of interest related to the 3D model (2a),
wherein the deleting step and the modifying step are performed by including second motion data determined by tracking at least one second gesture of a user (3) related to the physical object (2b).

5. Method according to one of the previous claims,
wherein for the determining of the motion data a 3D-depth sensor in the AR-device is used.

6. Method according to one of the previous claims,
wherein the method comprising the further step of:
- determining (S9) a position of the physical object (2b) within the physical environment (1) using a spatial awareness technology, especially Simultaneous Localization and Mapping (SLAM) technology,
wherein this further step (S9) is performed before the aligning (S1), in the augmented reality view, of the 3D model with the physical object (2b) within the physical environment (1),
wherein after the step of identifying (S3) said at least one place of interest, coordinates of said position of said at least one place of interest of the physical object are stored (S10) with a Simultaneous Localization and Mapping (SLAM) map.

7. Method according to one of the previous claims,
wherein the method comprising the further step of:
- categorizing (S11) said at least one place of interest into a predefined category (6),
wherein the categorizing is performed by including third motion data determined by tracking at least one third gesture of a user (3) related to the physical object (2b).

8. Method according to one of the previous claims,
wherein the method comprising the further step of:
- Labelling (S12) said at least one place of interest using an identifier (5).

9. Method according to claim 8,
wherein the identifier (5) comprises an information regarding:
- a mistake been made,
- an error,
- a faulty behaviour,
- an expectancy,
- a need for maintenance,
- a need for inspection and/or
- a need for quality assurance
related to the physical object (2b) and/or said at least one place of interest.

10. Method according to one of the previous claims,
wherein the method comprising the further step of:
- adding (S13) instructional data (7) to said at least one place of interest, the instructional data (7) being part of the 3D model (2a).

11. Method according to claim 10,
wherein the instructional data (7) comprising:
- a work instruction,
- a working step,
- a step to be performed,
- a guidance information,
- a visual instruction,
- training information,
- an instruction for performing an inspection,
- an instruction for performing quality assurance,
- an instruction for performing technical service and/or
- an instruction for performing a test.

12. Method according to one of the previous claims,
wherein the physical environment (1) being:
- an industrial environment,
- an industrial plant
- a production plant,
- an energy plant,
- a building environment,
- a hospital environment, and/or
- a technical environment.

13. Method according to one of the previous claims,
wherein the 3D model (2a) is arranged as:
- a 3D outline, comprising lines and points or
- a 3D volume, comprising lines, points, and surfaces.

14. A computer program product comprising instructions which, when the program is executed by the computational device, cause the computational device to carry out the steps of the method according to one of the claims 1 to 13.

15. A computer-readable storage medium comprising instructions which, when executed by the computational device, cause the computational device to carry out the steps of the method according to one of the claims 1 to 13.

## Patentansprüche

1. Verfahren zum Identifizieren mindestens einer interessierenden Stelle an einem physischen Gegenstand (2b) in einer physischen Umgebung (1), das Augmented Reality und ein 3D-Modell (2a) von dem physischen Gegenstand (2b) benutzt, wobei das Verfahren folgende Schritte umfasst:
- Ausrichten (S1) des 3D-Modells (2a) an dem physischen Gegenstand (2b) in der physischen Umgebung 1 in einer Augmented-Reality-Ansicht,
- Bestimmen (S2) von Bewegungsdaten durch Nachvollziehen mindestens einer Geste eines Benutzers (3), die den physischen Gegenstand (2b) betrifft,
- Identifizieren (S3) der mindestens einen interessierenden Stelle durch Bestimmen mindestens eines Schnittpunkts der mindestens einen Geste und des physischen Gegenstands (2b), wobei das Verfahren **dadurch gekennzeichnet ist, dass** es eine 3D-Engine benutzt, die Collider unterstützt, wobei Collider die Form eines 3D-Objekts in der 3D-Szene definieren und virtuelle Sensoren umfassen, die eine Überschneidungsnähe zwischen 3D-Objekten erkennen,
wobei:
- ein das 3D-Modell von dem physischen Gegenstand betreffender erster Collider und
- ein die Bewegungsdaten zu der mindestens einen Geste
eines Benutzers betreffender zweiter Collider vorhanden sind,
wobei der mindestens eine Schnittpunkt durch Benutzen mindestens eines virtuellen Nähesensors bestimmt wird, der auf den ersten Collider für das 3D-Modell in Bezug auf den zweiten Collider für die Bewegungsdaten zu der mindestens einen Geste angewendet wird.

2. Verfahren nach Anspruch 1,
wobei das Verfahren die folgenden weiteren Schritte umfasst:
- Anpassen (S4) einer Transparenz des 3D-Modells (2a) und/oder
- Erfassen (S5) von Bildmaterial (10), das die mindestens eine interessierende Stelle betrifft.

3. Verfahren nach einem der vorhergehenden Ansprüche,
wobei das Verfahren den folgenden weiteren Schritt umfasst:
- Speichern (S6) der mindestens einen interessierenden Stelle mit dem 3D-Modell (2a) von dem physischen Gegenstand (2b).

4. Verfahren nach Anspruch 3,
wobei das Verfahren die folgenden weiteren Schritte umfasst:
- Löschen (S7) der mindestens einen interessierenden Stelle in Bezug auf das 3D-Modell (2a) und/oder
- Ändern (S8) der mindestens einen interessierenden Stelle in Bezug auf das 3D-Modell (2a),
wobei das Löschen und das Ändern durch Aufnehmen zweiter Bewegungsdaten durchgeführt wird, die durch Nachvollziehen mindestens einer zweiten Geste eines Benutzers (3) in Bezug auf den physischen Gegenstand (2b) bestimmt werden.

5. Verfahren nach einem der vorhergehenden Ansprüche, wobei zum Bestimmen der Bewegungsdaten ein 3D-Tiefensensor in der AR-Vorrichtung benutzt wird.

6. Verfahren nach einem der vorhergehenden Ansprüche, das ferner den folgenden weiteren Schritt umfasst:
- Bestimmen (S9) einer Position des physischen Gegenstands (2b) in der physischen Umgebung (1) mithilfe einer Technologie für die räumliche Wahrnehmung, insbesondere für Simultaneous Localization and Mapping (SLAM),
wobei dieser weitere Schritt (S9) vor dem Ausrichten (S1) des 3D-Modells an dem physischen Gegenstand (2b) in der physischen Umgebung (1) in der Augmented-Reality-Ansicht durchgeführt wird,
wobei nach dem Identifizieren (S3) der mindestens einen interessierenden Stelle Koordinaten für deren Position an dem physischen Gegenstand mit einer Simultaneous-Localization-and-Mapping-Karte (SLAM-Karte) gespeichert werden (S10).

7. Verfahren nach einem der vorhergehenden Ansprüche,
wobei das Verfahren den folgenden weiteren Schritt umfasst:
- Kategorisieren (S11) der mindestens einen interessierenden Stelle in eine vorgegebene Kategorie (6),
wobei das Kategorisieren durch Aufnehmen dritter Bewegungsdaten durchgeführt wird, die durch Nachvollziehen mindestens einer dritten Geste eines Benutzers (3) in Bezug auf den physischen Gegenstand (2b) bestimmt werden.

8. Verfahren nach einem der vorhergehenden Ansprüche,
wobei das Verfahren den folgenden weiteren Schritt umfasst:
- Kennzeichnen (S12) der mindestens einen interessierenden Stelle mithilfe einer Bezeichnung (5).

9. Verfahren nach Anspruch 8,
wobei die Bezeichnung (5) eine Information zu Folgendem umfasst:
- einem erfolgten Fehler,
- einer Störung,
- einem fehlerhaften Verhalten,
- einer Erwartung,
- einem Wartungsbedarf,
- einem Überprüfungsbedarf und/oder
- einem Qualitätssicherungsbedarf
in Bezug auf den physischen Gegenstand (2b) und/oder die mindestens eine interessierende Stelle.

10. Verfahren nach einem der vorhergehenden Ansprüche,
wobei das Verfahren den folgenden weiteren Schritt umfasst:
- Hinzufügen (S13) von Befehlsdaten (7) zu der mindestens einen interessierenden Stelle, wobei die Befehlsdaten (7) zu dem 3D-Modell (2a) gehören.

11. Verfahren nach Anspruch 10,
wobei die Befehlsdaten (7) Folgendes umfassen:
- einen Arbeitsbefehl,
- einen Arbeitsschritt,
- einen durchzuführenden Schritt,
- eine Anleitungsinformation,
- einen visuellen Befehl,
- Trainingsinformationen,
- einen Befehl, eine Überprüfung durchzuführen,
- einen Befehl, eine Qualitätssicherung durchzuführen,
- einen Befehl, einen technischen Dienst durchzuführen, und/oder
- einen Befehl, einen Test durchzuführen.

12. Verfahren nach einem der vorhergehenden Ansprüche,
wobei es sich bei der physischen Umgebung (1) um Folgendes handelt:
- eine Industrieumgebung,
- eine Industrieanlage,
- ein Produktionsanlage,
- eine Energieanlage,
- eine Gebäudeumgebung,
- eine Krankenhausumgebung und/oder
- eine technische Umgebung.

13. Verfahren nach einem der vorhergehenden Ansprüche,
wobei das 3D-Modell (2a) folgendermaßen angeordnet ist:
- als 3D-Grundriss mit Linien und Punkten oder
- als 3D-Volumen mit Linien, Punkten und Flächen.

14. Computerprogrammprodukt mit Befehlen, die, wenn das Programm von der Rechenvorrichtung ausgeführt wird, diese dazu veranlassen, die Schritte des Verfahrens nach einem der Ansprüche 1 bis 13 durchzuführen.

15. Computerlesbares Speichermedium mit Befehlen, die, wenn sie von der Rechenvorrichtung ausgeführt werden, diese dazu veranlassen, die Schritte des Verfahrens nach einem der Ansprüche 1 bis 13 durchzuführen.

## Revendications

1. Procédé d'identification d'au moins un lieu d'intérêt sur un objet physique (2b) dans un environnement physique (1), en utilisant la réalité augmentée et un modèle en 3D (2a) de l'objet physique (2b),
le procédé comprenant les étapes :
- aligner (S1), dans une vue en réalité augmentée, le modèle en 3D (2a) avec l'objet physique (2b) dans l'environnement physique 1,
- déterminer (S2) des données de mouvement en suivant au moins un geste d'un utilisateur (3) lié à l'objet physique (2b),
- identifier (S3) ledit au moins un lieu d'intérêt en déterminant au moins un point d'intersection dudit au moins un geste et l'objet physique (2b),
le procédé étant **caractérisé en ce qu'**il utilise un moteur 3D supportant des collisionneurs,
dans lequel les collisionneurs définissent la forme d'un objet en 3D, dans le décor en 3D et comprennent des capteurs virtuels qui détectent la proximité de l'intersection parmi des objets en 3D,
dans lequel existent :
- un premier collisionneur lié au modèle en 3D de l'objet physique, et
- un deuxième collisionneur lié aux données de mouvement de le au moins un geste d'un utilisateur,
dans lequel ledit au moins un point d'intersection est déterminé en utilisant au moins un capteur de proximité virtuel appliqué au premier collisionneur du modèle en 3D en relation avec le deuxième collisionneur des données de mouvement de le au moins un geste.

2. Procédé selon la revendication 1,
dans lequel le procédé comprend les étapes supplémentaires :
- adapter (S4) une transparence du modèle en 3D (2a), et/ou
- acquérir (S5) une documentation par image (10), la documentation par image (10) étant liée audit au moins un lieu d'intérêt.

3. Procédé selon l'une des revendications précédentes,
dans lequel le procédé comprend les étapes supplémentaires :
- stocker (S6) ledit au moins un lieu d'intérêt avec le modèle en 3D (2a) de l'objet physique (2b).

4. Procédé selon la revendication 3,
dans lequel le procédé comprend les étapes supplémentaires :
- effacer (S7) ledit au moins un lieu d'intérêt lié au modèle en 3D (2a), et/ou
- modifier (S8) ledit au moins un lieu d'intérêt lié au modèle en 3D (2a),
dans lequel l'étape de suppression et l'étape de modification sont effectuées en incluant des deuxièmes données de mouvement déterminées en suivant au moins un deuxième geste d'un utilisateur (3) lié à l'objet physique (2b).

5. Procédé selon l'une des revendications précédentes,
dans lequel, pour la détermination des données de mouvement, un capteur de profondeur en 3D dans le dispositif AR est utilisé.

6. Procédé selon l'une des revendications précédentes,
dans lequel le procédé comprend en outre l'étape :
- déterminer (S9) une position de l'objet physique (2b) dans l'environnement physique (1) en utilisant une technologie de perception spatiale, en particulier une technologie de Localisation et de Cartographie Simultanée (SLAM),
dans lequel cette étape supplémentaire (S9) est réalisée avant l'alignement (S1), dans la vue en réalité augmentée, du modèle en 3D avec l'objet physique (2b) dans l'environnement physique (1),
dans lequel, après l'étape d'identification (S3) dudit au moins un lieu d'intérêt, des coordonnées de ladite position dudit au moins un lieu d'intérêt de l'objet physique sont stockées (S10) avec une carte de Localisation et Cartographie Simultanée (SLAM).

7. Procédé selon l'une des revendications précédentes,
dans lequel le procédé comprend l'étape supplémentaire :
- catégoriser (S11) ledit au moins un lieu d'intérêt dans une catégorie prédéfinie (6),
dans lequel la catégorisation est effectuée en incluant des troisièmes données de mouvement déterminées en suivant au moins un troisième geste d'un utilisateur (3) lié à l'objet physique (2b).

8. Procédé selon l'une des revendications précédentes,
dans lequel le procédé comprend l'étape supplémentaire :
- étiqueter (S12) ledit au moins un lieu d'intérêt en utilisant un identifiant (5).

9. Procédé selon la revendication 8,
dans lequel l'identifiant (5) comprend une information concernant :
- une faute réalisée,
- une erreur,
- un comportement défaillant,
- une attente,
- un besoin d'entretien,
- un besoin d'inspection, et/ou
- un besoin d'assurance qualité
liée à l'objet physique (2b) et/ou audit au moins un lieu d'intérêt.

10. Procédé selon l'une des revendications précédentes,
dans lequel le procédé comprend l'étape supplémentaire :
- ajouter (S13) des données d'instruction (7) audit au moins un lieu d'intérêt, lesdites données d'instruction (7) faisant partie dudit modèle en 3D (2a).

11. Procédé selon la revendication 10,
dans lequel les données d'instruction (7) comprennent :
- une instruction de travail,
- une étape de travail,
- une étape à réaliser,
- une information de guidage,
- une instruction visuelle,
- une information de formation,
- une instruction pour effectuer une inspection,
- une instruction pour effectuer une assurance qualité,
- une instruction pour effectuer un service technique, et/ou
- une instruction pour effectuer un test.

12. Procédé selon l'une des revendications précédentes,
dans lequel l'environnement physique (1) est :
- un environnement industriel,
- un site industriel,
- un site de production,
- un site énergétique,
- un environnement de bâtiment,
- un environnement hospitalier, et/ou
- un environnement technique.

13. Procédé selon l'une des revendications précédentes,
dans lequel le modèle en 3D (2a) est agencé comme :
- un contour en 3D, comprenant des lignes et des points, ou
- un volume en 3D, comprenant des lignes, des points, et des surfaces.

14. Produit de programme informatique comprenant des instructions qui, lorsque le programme est exécuté par le dispositif informatique, amènent le dispositif informatique à effectuer les étapes du procédé selon l'une des revendications 1 à 13.

15. Support de stockage lisible sur ordinateur comprenant des instructions qui, lorsqu'elles sont exécutées par le dispositif informatique, amènent le dispositif informatique à effectuer les étapes du procédé selon l'une des revendications 1 à 13.
